Europäisches Patentamt

European Patent Office

Office européen des brevets

(19)

(11) EP 0 736 058 B1

(12) EUROPÄISCHE PATENTSCHRIFT

(45) Veröffentlichungstag und Bekanntmachung des Hinweises auf die Patenterteilung:
**02.06.1999 Patentblatt 1999/22**

(21) Anmeldenummer: **95903702.9**

(22) Anmeldetag: **22.12.1994**

(51) Int Cl.$^6$: **C08G 81/02**, C09D 133/06, B05D 7/26
// (C09D133/06, 133:14), (C09D133/06, 161:20)

(86) Internationale Anmeldenummer:
**PCT/AT94/00203**

(87) Internationale Veröffentlichungsnummer:
**WO 95/17450 (29.06.1995 Gazette 1995/27)**

(54) **WASSERVERDÜNNBARE LACKBINDEMITTEL AUF DER BASIS VON ACRYLATCOPOLYMERISATEN, EIN VERFAHREN ZU IHRER HERSTELLUNG UND DEREN VERWENDUNG**

WATER-DILUTABLE, ACRYLATE COPOLYMER-BASED LACQUER BINDERS, A PROCESS FOR THEIR PRODUCTION AND THEIR USE

LIANTS DILUABLES DANS L'EAU A BASE DE COPOLYMERES D'ACRYLATE POUR LAQUES, UN PROCEDE DE LEUR PREPARATION ET LEUR UTILISATION

(84) Benannte Vertragsstaaten:
**AT BE DE ES FR GB GR IT NL SE**

(30) Priorität: **23.12.1993 AT 26069/39**
**13.07.1994 AT 13769/49**

(43) Veröffentlichungstag der Anmeldung:
**09.10.1996 Patentblatt 1996/41**

(73) Patentinhaber: **Vianova Resins AG**
**8402 Werndorf (AT)**

(72) Erfinder:
• **WILFINGER, Werner**
**A-8042 Graz (AT)**
• **KRIESSMANN, Ingo**
**A-8010 Graz (AT)**
• **GOSSAK, Kurt**
**A-8042 Graz (AT)**

(74) Vertreter: **Zounek, Nikolai, Dipl.-Ing. et al**
**Patentanwaltskanzlei Zounek,**
**Industriepark Kalle Albert,**
**Rheingaustrasse 190-196**
**65203 Wiesbaden (DE)**

(56) Entgegenhaltungen:
**EP-A- 0 496 079**

**Beschreibung**

Die Erfindung betrifft ein Verfahren zur Herstellung von wasserverdünnbaren Lackbindemitteln auf der Basis von Acrylatcopolymerisaten und deren Verwendung zur Formulierung von wasserverdünnbaren Einbrennlacken mit einem niedrigen Gehalt an organischen Hifslösemitteln.

Wasserverdünnbare Bindemittel, die durch partielle Kondensation einer nach Neutralisation der Carboxylgruppen wasserlöslichen Polycarboxylkomponente mit einer harzartigen, im wesentlichen nicht wasserverdünnbaren Polyhydroxylkomponente erhalten werden, und die sich durch ein günstiges Viskositätsverhalten beim Verdünnen mit Wasser auszeichnen, werden in einer Reihe von Schutzrechten beansprucht, beispielsweise in AT-PS 328 587, AT-PS 379 607, AT-PS 388 738, AT-PS 388 382 und EP 0 496 079 A2.

Die Berstellung von Acrylatcopolymerisaten gemäß der EP 0 496 079 A2 erfordert einen hohen Aufwand an begleitenden analytischen Kontrollmaßnahmen, um eine gleichbleibende Qualität dieser Produkte zu gewährleisten.

Es wurde nun gefunden, daß sich durch die Umsetzung einer Polycarboxylkomponente mit einer Epoxidgruppen aufweisenden Polyhydroxylkomponente die Herstellung derartiger wasserverdünnbarer Acrylatcopolymerisate einfacher, schneller und besser reproduzierbar durchführen läßt.

Die Erfindung betrifft demgemäß ein Verfahren zur Herstellung von wasserverdünnbaren Lackbindemitteln auf der Basis von Acrylatcopolymerisaten, welche durcn die Umsetzung einer Polycarboxylkomponente mit einer Polyhydroxylkomponente und eine nachfolgende, zumindest teilweise Neutralisation der Carboxylgruppen erhalten werden, welches dadurch gekennzeichnet ist, daß man

(A) 15 bis 40 Gew.-%, bezogen auf Feststoffgehalt, eines Acrylatcopolymerisats als Polycarboxylkomponente mit einer Säurezahl von 70 bis 240 mg KOH/g,
welches in Form eines Lösungspolymerisats aus

| (Aa) 67 bis 90 | Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen ersetzt sein können, und |
| (Ab) 10 bis 33 | Gew.-% $\alpha,\beta$-ethylenisch ungesättigten Carbonsäuren |

hergestellt wurde,
mit

(B) 60 bis 85 Gew.-%, bezogen auf Feststoffgehalt, eines Acrylatcopolymerisats als Polyhydroxylkomponente mit einer Hydroxylzahl von 90 bis 250 mg KOH/g und
einem Epoxidäquivalent von 0,7 bis 26,0 Milliäquivalenten/100 g Feststoff, welches in Form eines Lösungspolymerisats aus

| (Ba) 40 bis 79,9 | Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen ersetzt sein können, |
| (Bb) 20 bis 59,9 | Gew.-% Monoester der (Meth)acrylsäure mit Diolen, welche einen Alkylenrest mit 2 bis 4 C-Atomen oder einen Oxyalkylenrest mit 6 bis 12 C-Atomen aufweisen, sowie |
| (Bc) 0,1 bis 3 | Gew.-% eines Epoxidgruppen aufweisenden Monomeren |

hergestellt wurde, wobei sich die Angaben für die Säurezahl und die Hydroxylzahl immer auf den Feststoff beziehen und die Summen der Prozentzahlen für die Komponenten (A) und (B) bzw. (Aa) und (Ab) bzw. (Ba) bis (Bc) jeweils 100 ergeben müssen,

mischt, mit der Maßgabe, daß die Mischung eine Säurezahl von mindestens 15 mg KOH/g aufweist, unter Vakuum das Lösemittel entfernt, bis der Feststoffgehalt des Ansatzes mindestens 95 Gew.-% beträgt, den Ansatz mit einem Hilfslösemittel auf einen Feststoffgehalt von 85 bis 93 Gew.-% verdünnt und anschließend die Mischung bei einer Temperatur von 100 bis 150°C so lange hält, bis das Epoxidäquivalent des Ansatzes auf weniger als 0,2 Milliäquivalente/100 g Feststoff gefallen ist, sowie die nach diesem Verfahren hergestellten Erzeugnisse.

Die Erfindung betrifft weiters die Verwendung der nach diesem Verfahren hergestellten Bindemittel in Kombination mit Vernetzungskomponenten und gegebenenfalls mit anderen Lackbindemitteln zur Formulierung von wasserverdünnbaren Einbrennlacken mit einem niedrigen Gehalt an organischen Hilfslösemitteln.

Im Vergleich zu dem in der EP 0 496 079 A2 beschriebenen Verfahren ist es mit Hilfe des erfindungsgemäßen Verfahrens möglich, ähnlich zusammengesetzte wasserverdünnbare Acrylatcopolymerisate bei einfacher Versuchs führung, kurzer Reaktionsdauer und ohne Gefahr des Gelierens herzustellen.

Die Komponenten (A) und (B) werden in bekannter Weise durch Lösungspolymerisation, vorzugsweise in Alkoholen oder Glykolethern, hergestellt. Dabei werden die Monomeren in den im Hauptanspruch angegebenen Mengenverhältnissen eingesetzt.

Als Monomerenkomponente (Aa) bzw. (Ba) werden (Meth)acrylsäureester von Alkanolen mit 1 bis 12 C-Atomen, sowie gegebenenfalls anteilig, d.h. bis zu 50 Gew.-%, auch aromatische Vinylmonomere, insbesonders Styrol, verwendet.

Die Komponente (Ab) besteht vorzugsweise aus Acryl- oder Methacrylsäure, doch können gegebenenfalls auch andere $\alpha,\beta$-ethylenisch ungesättigte Carbonsäuren, wie Maleinsäure und deren Halbester, eingesetzt werden.

Als Komponente (Bb) werden Monoester der (Meth)acrylsäure mit Diolen, welche 2 bis 4 C-Atome aufweisen, wie Ethylenglykol, Propylenglykol und Butylenglykol bzw. die entsprechenden isomeren Verbindungen, eingesetzt. Weiters können auch Monoester von Ethergruppen enthaltenden Alkandiolen mit 6 bis 12 C-Atomen verwendet werden, beispielsweise Tri- oder entsprechende Polyethylenglykolmono (meth)acrylsäureester bzw. Di- oder entsprechende Polypropylenglykolmono(meth)acrylsäureester.

Epoxidgruppen aufweisende Monomere als Komponente (Bc) sind vorzugsweise Glycidyl(meth)acrylat und/oder Glycidylallylether.

Die Polycarboxylkomponente (A) hat eine Säurezahl von 70 bis 240 mg KOH/g, vorzugsweise von 100 bis 200 mg KOH/g.

Die Hydroxylzahl der Polyhydroxylkomponente (B) liegt zwischen 90 und 250 mg KOH/g, vorzugsweise zwischen 110 und 180 mg KOH/g, und das Epoxidäquivalent beträgt 0,7 bis 26,0 Milliäquivalente/100 g Feststoff.

Die Komponenten (A) und (B) werden in einem Verhältnis, bezogen auf Feststoffgehalt, zwischen 15 : 85 und 40 : 60 gemischt, mit der Maßgabe, daß die Mischung eine Säurezahl von mindestens 15 mg KOH/g aufweist. Die Lösemittel werden anschließend unter Vakuum weitgehend entfernt und durch Hilfslösemittel, wie Alkohole oder Glykolether, teilweise ersetzt, sodaß der Feststoffgehalt der Mischung 85 bis 93 Gew.-% beträgt.

Die Umsetzung der Polycarboxylkomponente (A) mit der Epoxidgruppen aufweisenden Polyhydroxylkomponente (B) erfolgt bei 100 bis 150°C, vorzugsweise bei 110 bis 130°C, bis das Epoxidäquivalent des Ansatzes auf weniger als 0,2 Milliäquivalente/100 g Feststoff gefallen ist. Anschließend wird ein geeignetes Neutralisationsmittel, wie Ammoniak und/oder ein Alkylamin und/oder ein Alkanolamin, zugegeben und mit Wasser auf den gewünschten Feststoffgehalt verdünnt.

Die erfindungsgemäß hergestellten Bindemittel dienen in Kombination mit Vernetzungskomponenten und gegebenenfalls mit anderen Lackbindemitteln zur Formulierung von Einbrennlacken mit einem sehr niedrigen Gehalt an organischen Hilfslösemitteln.

Insbesonders geeignet sind die Bindemittel zur Herstellung von wasserverdünnbaren Basislacken, wie sie beispielsweise in der Automobil-Serienlackierung für Zweischicht-Lackierungen, welche aus einer farb- und/oder effektgebenden Basislackschicht und einer Klarlackschicht bestenen, eingesetzt werden.

Derartige wasserverdünnbare Basislacke enthalten weiters, gegebenenfalls in Kombination mit zusätzlichen wasserverdünnbaren Bindemitteln, Vernetzungskomponenten, bevorzugt Aminoharze und/oder blockierte Polyisocyanate, sowie die dem Fachmann geläufigen Pigmente, Füllstoffe und Additive.

Als zusätzliche wasserverdünnbare Bindemittel, die auch als Pastenharze verwendet werden können, kommen vor allem Polyester-, Polyacrylat- und Polyurethanharze in Betracht.

Die wasserverdünnbaren Basislacke werden in bekannter Weise in Kombination mit Klarlacken appliziert und bei Temperaturen bis zu 160°C vernetzt.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

1. Herstellung der in den Beispielen verwendeten Polycarboxylkomponenten (A) und Polyhydroxylkomponenten (B)

Die Copolymerisate wurden in bekannter Weise durch Lösungspolymerisation in Isopropanol entsprechend einem berechneten Feststoffgehalt von 50 Gew.-% für die Komponenten (A) bzw. 65 Gew.-% für die Komponenten (B) hergestellt. Die Mengenverhältnisse und Kennzahlen sind in der Tabelle 1 zusammengefaßt.

2. Beispiele 1 bis 5

Herstellung der Acrylatcopolymerisate (AB1) bis (AB5)

Die Komponenten (A) und (B) werden in den Mengenverhältnissen gemäß Tabelle 2 gemischt. Das sopropanol wird unter Vakuum entfernt, bis der Feststoffgehalt des Ansatzes mindestens 95 Gew.-% beträgt. Nach Verdünnen des Ansatzes mit Dipropylenglykolmonomethylether auf einen Feststoffgehalt von ca. 90 Gew.-% wird die Mischung bei einer Temperatur von 110 bis 120°C so lange gehalten, bis das Epoxidäquivalent des Ansatzes auf weniger als 0,2 Milliäquivalente/100 g Feststoff gefallen ist. Nach dem Ende der Umsetzung wird auf 95°C gekühlt, neutralisiert und mit deionisiertem Wasser verdünnt.

Die Kennzahlen für die Produkte gemäß den Beispielen 1 bis 5 finden sich ebenfalls in der Tabelle 2.

Analytische Bestimmung des Epoxidäquivalents: (Milliäquivalente Epoxidgruppen / 100 g Feststoff)

Ca. 0,2 g der Probe werden auf einer Analysenwaage genau eingewogen und in 25 ml einer Mischung aus 4 Teilen Dichlormethan/1 Teil Eisessig unter leichtem Erwärmen gelöst. Nach dem Abkühlen auf Raumtemperatur werden 0,5 g Tetrabutylammoniumjodid hinzugefügt. Nach der Zugabe von 3 Tropfen Kristallviolett (0,1%ig in Eisessig) titriert man mit 0,1 n Perchlorsäure in Eisessig von blauviolett bis zum Umschlag nach grasgrün (grün ohne Blaustich!). Parallel zur Probe muß ein Blindwert ohne Harzeinwaage bestimmt werden.

$$\text{Epoxidäquivalent} = \frac{(A - B) \times 0,1 \times f}{\text{Einwaage (g)}}$$

A = Verbrauch ml 0,1 n Perchlorsäure für Probe
B = Verbrauch ml 0,1 n Perchlorsäure für Blindwert
f = Faktor der 0,1 n Perchlorsäure

Bestimmung des Faktors der 0,1 n Perchlorsäure:

In einem 300 ml Erlenmeyerkolben werden ca. 200 mg Kaliumhydrogenphthalat p.A. auf der Analysenwaage genau eingewogen, 30 ml Eisessig und 3 Tropfen Kristallviolett (0,1%ig in Eisessig) hinzugefügt und mit 0,1 n Perchlorsäure in Eisessig auf den Farbumschlag von violett auf deutlich grün titriert.

$$f = \frac{E}{V \times 20,422}$$

E = Einwaage Kaliumhydrogenphthalat p.A. in Milligramm
V = ml Verbrauch 0,1 n Perchlorsäure in Eisessig

Tabelle 1

|  |  | KOMPONENTE | | | | |
|---|---|---|---|---|---|---|
|  |  | (A1) | (A2) |  |  |  |
| (Aa) | Ethylacrylac | - | 25 |  |  |  |
|  | Butylacrylat | - | 35 |  |  |  |
|  | 2-Ethylhexylacrylat | 30 | - |  |  |  |
|  | Methylmethacrylat | - | 30 |  |  |  |
|  | Isobutylmethacrylat | 27 | - |  |  |  |
|  | Styrol | 18,5 | - |  |  |  |
| (Ab) | Acrylsäure | - | 10 |  |  |  |
|  | Methacrylsäure | 24,5 | - |  |  |  |
|  | Säurezahl mg KOH/g | 160 | 78 |  |  |  |

Tabelle 1   (fortgesetzt)

|  |  | KOMPONENTE | | | | |
|---|---|---|---|---|---|---|
|  |  | (B1) | (B2) | (B3) | (B4) | (B5) |
| (Ba) | Ethylacrylat | - | 19 | - | - | - |
|  | Butylacrylat | - | 14 | - | 30 | 23 |
|  | 2-Ethylhexylacrylat | 26 | - | - | - | - |
|  | Methylmethacrylat | - | 27 | 20 | - | 12 |
|  | Isobutylmethacrylat | 18 | - | 24 | 10 | 22,6 |
|  | Styrol | 24,2 | - | - | 31,8 | 10 |
| (Bb) | 4-Hydroxybutylacrylat | - | 9 | 33 | 22 | 15 |
|  | 2-Hydroxyethylmethacrylat | 31 | 30 | 21 | - | 17 |
|  | Tripropylenglykolmethacrylat | - | - | - | 6 | - |
| (Bc) | Glycidylacrylat | - | 1 | - | - | 0,4 |
|  | Glycidylmethacrylat | 0,8 | - | 1 | 0,2 | - |
|  | Glycidylallylether | - | - | 1 | - | - |
|  | Hydroxylzahl mg KOH/g | 137 | 169 | 228 | 95 | 134 |
|  | Epoxidäquivalent mÄqu./100 g FH | 5,6 | 7,8 | 15,8 | 1,4 | 3,1 |

Tabelle 2

| (alle Mengenangaben beziehen sich auf Feststoffgehalt) | | | | | |
|---|---|---|---|---|---|
| Beispiel | 1 (AB1) | 2 (AB2) | 3 (AB3) | 4 (AB4) | 5 (AB5) |
| Menge/Komponente (A) | 25 (A1) | 30 (A1) | 40 (A2) | 20 (A2) | 25 (A2) |
| Menge/Komponente (B) | 75 (B1) | 70 (B2) | 60 (B3) | 80 (B4) | 75 (B5) |
| Säurezahl mg KOH/g der Mischung | 40 | 48 | 31 | 16 | 20 |
| Feststoffgehalt Gew.-%[1] | 91,5 | 91,3 | 92,0 | 90,8 | 91,5 |
| Additionsreaktion min/°C | 30/120 | 15/115 | 30/115 | 60/120 | 45/120 |
| Epoxidäquivalent[2] mÄqu./100 g FH | 0,12 | 0,18 | 0,08 | 0,12 | 0,09 |
| Neutralisationsmittel | DMA | TEA | DMA | DMA | DMA |
| Neutralisationsgrad (% der COOH-Gruppen) | 90 | 80 | 100 | 100 | 100 |
| Verdünnung mit $H_2O$ auf Gew.-% Feststoffgehalt/ Lieferform | 42,3 | 43,5 | 41,8 | 43,2 | 44,6 |
| pH-Wert der 10%igen Lösung (20°C) | 8,7 | 8,3 | 8,9 | 8,8 | 8,7 |
| Gew.-% organisches Lösemittel und Amin in Lieferform | 6,3 | 7,5 | 5,7 | 5,5 | 5,6 |

[1] Gew.-% Feststoffgehalt der Mischung nach der Zugabe von Dipropylenglykolmonomethylether

[2] nach Ende der Umsetzung DMA = Dimethylethanolamin TEA = Triethylamin

### 3. Lacktechnische Prüfung der Acrylatcopolymerisate (AB1) bis (AB5)

#### 3.1. Klarlacke in einem Metalleffekt-base coat/clear coat-System und Weißlacke

Die Rezepturen sind in den Tabellen 3 und 4 zusammengefaßt.

Die Indices 1) bis 9) in den Tabellen 3 und 4 bedeuten:

1) Handelsübliches Melaminharz, mittelreaktiv, 85%ig in Wasser (Cymel® 373, Cyanamid)

2) Handelsübliches Silicon-Verlaufsmittel für wasserverdünnbare Lacke (Additol® XW 329, Hoechst)

3) Handelsübliche Lichtschutzmittelkombination Benztriazol-UV-Absorber (Tinuvin® 1130, Ciba-Geigy) mit sterisch gehindertem Amin (Tinuvin® 292, Ciba-Geigy) im Verhältnis 1 : 1

4) Handelsüblicher Entschäumer auf Basis von Acetylendiolen (Surfinol® E 104/50 %, Air-Products)

5) Vollentsalztes Wasser

6) HS-Wert als Maßzahl für den Gehalt an flüchtigen organischen Lösemitteln:

$$\text{HS-Wert} = \frac{\text{Gew.-\% Lack-Feststoffgehalt (LF) X 100}}{\text{Gew.-\% LF+Gew.-\% Hilfslösemittel+Gew.-\% Amin}}$$

7) Auslaufzeit nach DIN 53211/23°C in Sekunden

8) Gehalt an organischen Hilfslösemitteln und Amin in Gew.-%

9) Handelsübliches Titandioxid (Kronos® CL 310, Kronos)

Die Lackansätze wurden mit Dimethylethanolamin auf eine pH-Wert von 7,5 bis 9,0 eingestellt und mit deionisiertem Wasser auf eine Viskosität entsprechend einer Auslaufzeit nach DIN 53211/23°C von ca. 32 Sekunden verdünnt.

Die Applikation der Klarlacke erfolgte auf beschichtete Stahlbleche (Zinkphosphatierung, kathodisch abgeschiedener Elektrotauchlack, Füller, Metalleffekt-base coat, wobei in der Automobilindustrie eingesetzte Produkte verwendet wurden) durch Spritzen bei 23°C und 60 % rel. Luftfeuchtigkeit. Nach einer Ablüftzeit von 10 Minuten und einer Vortrockenzeit von 10 Minuten bei 80°C wurden die Lacke 30 Minuten bei 140°C eingebrannt.

Die Weißlacke wurden auf beschichtete Stahlbleche (Zinkphosphatierung, kathodisch abgeschiedener Elektrotauchlack, Füller, wobei in der Automobilindustrie eingesetzte Produkte verwendet wurden) in analoger Weise appliziert und eingebrannt.

Die Ergebnisse sind in den Tabellen 5 und 6 zusammengefaßt, die Indices (1) bis (4) bedeuten:

(1) gemessen mit einem Glanzmeßgerät der Marke Byk Type Colourgloss 2 bei einem Winkel von 60°

(2) Ein acetongetränkter Wattebausch wird auf den Lackfilm gelegt und die Zeit bis zur Erweichung des Films gemessen

(3)

+: der Lackfilm ist nach einer Wasserlagerung bei 40°C nach 240 Stunden unverändert

(+): der Lackfilm ist nach einer Wasserlagerung bei 40°C nach 240 Stunden erweicht, er regeneriert sich jedoch nach ca. zwei Stunden Lagerung bei Raumtemperatur

(4) bei keilförmigem Lackauftrag (max. 60 μm, mind. 15 μm) wird ab der angegebenen Schichtstärke im eingebrannten Lackfilm Bläschenbildung bzw. Abrinnen festgestellt.

Tabelle 3

| Acrylatcopolymerisat (AB)/Lieferform | Klarlack | | | |
|---|---|---|---|---|
| | 1 | 2 | 3 | 4 |
| (AB1) | 75,0 | | | |
| (AB2) | | 69,1 | | |
| (AB4) | | | 74,1 | |
| (AB5) | | | | 70,6 |
| Melaminharz[1] | 16,0 | 15,3 | 9,4 | 12,4 |
| Verlaufsmittel[2] | 0,2 | 0,2 | 0,3 | 0,3 |
| Lichtschutzmittel[3] | 1,2 | 1,2 | 1,4 | 1,3 |
| Entschäumer[4] | 0,5 | 0,5 | 0,5 | 0,5 |
| H$_2$O[5] | 7,1 | 13,8 | 14,3 | 14,9 |
| | 100 | 100 | 100 | 100 |

Tabelle 3   (fortgesetzt)

| Acrylatcopolymerisat (AB)/Lieferform | Klarlack | | | |
|---|---|---|---|---|
| | 1 | 2 | 3 | 4 |
| (AB) : MF-Harz[*] | 70:30 | 70:30 | 80:20 | 75:25 |
| Feststoffgehalt in Gew.-% | 46,9 | 44,6 | 42 | 43,7 |
| HS-Wert[6] | 90,4 | 89,2 | 90,7 | 91,2 |
| pH-Wert | 8,7 | 8,7 | 8,7 | 8,6 |
| Viskosität[7] | 30 | 30 | 30 | 30 |
| LM + A im Lack[8] | 5,0 | 5,4 | 4,3 | 4,3 |

[*] bezogen auf Feststoff

Tabelle 4

| Acrylatcopolymerisat (AB)/Lieferform | Weißlack | |
|---|---|---|
| | 1 | 2 |
| (AB1) | 46,3 | |
| (AB3) | | 51,0 |
| Melaminharz[1] | 9,9 | 10,7 |
| $TiO_2$[9] | 24,8 | 23,3 |
| Verlaufsmittel[2] | 0,2 | 0,2 |
| Entschäumer[4] | 0,4 | 0,4 |
| $H_2O$[5] | 18,4 | 14,4 |
| | 100 | 100 |
| (AB) : MF-Harz[*] | 70:30 | 70:30 |
| Feststoffgehalt in Gew.-% | 53,2 | 54,1 |
| HS-Wert[6] | 94,5 | 94,6 |
| pH-Wert | 8,5 | 8,4 |
| Viskosität[7] | 32 | 35 |
| LM + A im Lack[8] | 3,1 | 3,1 |

[*] bezogen auf Feststoff

Tabelle 5

| Klarlack | 1 | 2 | 3 | 4 |
|---|---|---|---|---|
| Pendelhärte DIN 53157 in Sek. | 165 | 180 | 190 | 195 |
| Gitterschnitt (DIN 53151) | 0-1 | 0-1 | 0 | 0-1 |
| Glanz (1) | 89 | 86 | 86 | 84 |
| Acetonbeständigkeit in Min. (2) | 2 | 3 | 2 | 2 |
| Wasserbeständigkeit (3) | (+) | (+) | + | + |
| Tendenz zur Bläschenbildung µm, (4) | 37 | 39 | 40 | 40 |
| Tendenz zum Abrinnen µm (4) | 42 | 40 | 40 | 38 |

Tabelle 6

| Weißlack | 1 | 2 |
|---|---|---|
| Pendelhärte DIN 53157 in Sek. | 175 | 160 |
| Gitterschnitt (DIN 53151) | 1-2 | 2 |
| Glanz (1) | 82 | 78 |
| Acetonbeständigkeit in Min. (2) | 2 | 2 |
| Wasserbeständigkeit (3) | (+) | (+) |
| Tendenz zur Bläschenbildung µm, (4) | 41 | 37 |
| Tendenz zum Abrinnen µm (4) | 40 | 42 |

### 3.2. Lindgrüner wasserverdünnbarer Basislack

### 3.2.1. Herstellung einer grünen Pigmentpaste

20 Teile eines chlorierten Phthalocyaninpigments werden mit einem Dissolver in einer Mischung aus 20 Teilen eines Pastenharzes gemäß EP 0438090 A1 (Pastenharz 1), 35 Teilen Butoxyethanol und 0,5 Teilen Dimethylethanolamin vordispergiert und anschließend auf einer Perlmühle dispergiert. Danach wird die Pigmentpaste mit 24,5 Teilen vollentsalztem Wasser verdünnt.

### 3.2.2. Herstellung einer weißen Pigmentpaste

60 Teile Titandioxid werden mit einem Dissolver in einer Mischung aus 10 Teilen eines Pastenharzes gemäß EP 0438090 A1 (Pastenharz 1), 15 Teilen Butoxyethanol und 0,5 Teilen Dimethylethanolamin vordispergiert und anschließend auf einer Perlmühle dispergiert. Danach wird die Pigmentpaste mit 14,5 Teilen vollentsalztem Wasser verdünnt.

### 3.2.3. Herstellung und Applikation des lindgrünen wasserverdünnbaren Basislacks

In einem Dissolver werden 25 Teile des Acrylatcopolymerisats (AB3) mit 0,5 Teilen Dimethylethanolamin neutralisiert. Es werden 8 Teile eines 2 : 1-Gemisches aus Butylglykol und Butyldiglykol, 2 Teile eines handelsüblichen Entschäumers, 4 Teile eines sauren Acrylatverdickers, 12 Teile eines Pastenharzes gemäß EP 0438090 A1 (Pastenharz 1) und 5 Teile Vernetzer (Cymel 323) zugegeben. Nach dem Homogenisieren der Mischung werden dem Ansatz 10 Teile der unter 3.2.1. erhaltenen grünen Pigmentpaste und 3 Teile der unter 3.2.2. erhaltenen weißen Pigmentpaste zugegeben. Es wird nochmals homogen vermischt und mit 30,5 Teilen vollentsalztem Wasser verdünnt.

Der Basislack wird auf ein phosphatiertes und mit einer kathodischen Tauchlackierung und einem Füller vorbeschichtetes Karosserieblech durch Spritzen in einer Trockenschichtdicke von 20 µm aufgebracht. Anschließend wird bei Raumtemperatur 10 Minuten abgelüftet, 10 Minuten bei 80°C vorgetrocknet und ein handelsüblicher, melaminharzhärtender Autoserienklarlack auf Acrylatharzbasis in einer Trockenschichtdicke von 35 µm überlackiert. Der Zweischicht-Decklack wird 30 Minuten bei 130°C (Objekttemperatur) eingebrannt.

Die so erhaltene Mehrschicht-Lackierung entspricht in ihren optischen und mechanischen Eigenschaften allen von der Automobilindustrie gestellten Anforderungen.

**Patentansprüche**

1. Verfahren zur Herstellung von wasserverdünnbaren Lackbindemitteln auf der Basis von Acrylatcopolymerisaten, welche durch die Umsetzung einer Polycarboxylkomponente mit einer Polyhydroxylkomponente und eine nachfolgende, zumindest teilweise Neutralisation der Carboxylgruppen erhalten werden, <u>dadurch gekennzeichnet,</u> daß man

(A) 15 bis 40 Gew.-%, bezogen auf Feststoffgehalt, eines Acrylatcopolymerisats als Polycarboxylkomponente mit einer Säurezahl von 70 bis 240 mg KOH/g, welches in Form eines Lösungspolymerisats aus

| (Aa) 67 bis 90 | Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen ersetzt sein können, und |
| (Ab) 10 bis 33 | Gew.-% $\alpha,\beta$-ethylenisch ungesättigten Carbonsäuren |

hergestellt wurde,
mit

(B) 60 bis 85 Gew.-%, bezogen auf Feststoffgehalt, eines Acrylatcopolymerisats als Polyhydroxylkomponente mit einer Hydroxylzahl von 90 bis 250 mg KOH/g und einem Epoxidäquivalent von 0,7 bis 26,0 Milliäquivalenten/100 g Feststoff, welches in Form eines Lösungspolymerisats aus

| (Ba) 40 bis 79,9 | Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen ersetzt sein können, |
| (Bb) 20 bis 59,9 | Gew.-% Monoester der (Meth)acrylsäure mit Diolen, welche einen Alkylenrest mit 2 bis 4 C-Atomen oder einen Oxyalkylenrest mit 6 bis 12 C-Atomen aufweisen, sowie |
| (Bc) 0,1 bis 3 | Gew.-% eines Epoxidgruppen aufweisenden Monomeren |

hergestellt wurde, wobei sich die Angaben für die Säurezahl und die Hydroxylzahl immer auf den Feststoff beziehen und die Summen der Prozentzahlen für die Komponenten (A) und (B) bzw. (Aa) und (Ab) bzw. (Ba) bis (Bc) jeweils 100 ergeben müssen,

mischt, mit der Maßgabe, daß die Mischung eine Säurezahl von mindestens 15 mg KOH/g aufweist, unter Vakuum das Lösemittel entfernt, bis der Feststoffgehalt des Ansatzes mindestens 95 Gew.-% beträgt, den Ansatz mit einem Hilfslösemittel auf einen Feststoffgehalt von 85 bis 93 Gew.-% verdünnt und anschließend die Mischung bei einer Temperatur von 100 bis 150°C so lange hält, bis das Epoxidäquivalent des Ansatzes auf weniger als 0,2 Milliäquivalente/100 g Feststoff gefallen ist.

2. Verfahren nach Anspruch 1, dadurch gekennzeichnet, daß man als Komponente (Bc) Glycidyl(meth)acrylat und/ oder Glycidylallylether einsetzt.

3. Verwendung der gemäß den Ansprüchen 1 und 2 hergestellten Bindemittel in Kombination mit Vernetzungskomponenten und gegebenenfalls mit anderen Lackbindemitteln zur Formulierung von wasserverdünnbaren Einbrennlacken mit einem niedrigen Gehalt an organischen Hilfslösemitteln.

4. Verwendung der gemäß den Ansprüchen 1 und 2 hergestellten Lackbindemittel in Kombination mit Vernetzungskomponenten und weiteren Lackrohstoffen zur Formulierung von wasserverdünnbaren Basislacken.

5. Verfahren zur Herstellung von Zweischicht-Lackierungen, dadurch gekennzeichnet, daß nach dem Auftragen einer Basislackschicht auf ein Substrat eine weitere Klarlackschicht aufgetragen wird, wobei die Basislackschicht die gemäß den Ansprüchen 1 und 2 hergestellten Bindemittel enthält.

6. Wasserverdünnbare Lackbindemittel auf der Basis von Acrylatcopolymerisaten, erhältlich durch Umsetzung einer Polycarboxylkomponente (A) mit einer Polyhydroxylkomponente (B) und eine nachfolgende, zumindest teilweise Neutralisation der Carboxylgruppen, dadurch gekennzeichnet, daß man

(A) 15 bis 40 Gew.-%, bezogen auf Feststoffgehalt, eines Acrylatcopolymerisats als Polycarboxylkomponente mit einer Säurezahl von 70 bis 240 mg KOH/g, welches in Form eines Lösungspolymerisats aus

(Aa) 67 bis 90 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen ersetzt sein können, und
(Ab) 10 bis 33 Gew.-% ethylenisch ungesättigten Carbonsäuren hergestellt wurde,

mit
(B) 60 bis 85 Gew.-%, bezogen auf Feststoffgehalt, eines Acrylatcopolymerisats als Polyhydroxylkomponente mit einer Hydroxylzahl von 90 bis 250 mg KOH/g und einem Epoxidäquivalent von 0,7 bis 26,0 Milliäquivalenten/ 100 g Feststoff, welches in Form eines Lösungspolymerisats aus

(Ba) 40 bis 79,9 Gew.-% (Meth)acrylsäurealkylester, welche einen Alkylrest mit 1 bis 12 C-Atomen aufweisen, wobei diese Ester in einem Anteil von bis zu 50 Gew.-% durch aromatische Vinylverbindungen ersetzt sein können,
(Bb) 20 bis 59,9 Gew.-% Monoester der (Meth)acrylsäure mit Diolen, welche einen Alkylenrest mit 2 bis 4 C-Atomen oder einen Oxyalkylenrest mit 6 bis 12 C-Atomen aufweisen, sowie
(Bc) 0,1 bis 3 Gew.-% eines Epoxidgruppen aufweisenden Monomeren

hergestellt wurde, wobei sich die Angaben für die Säurezahl und die Hydroxylzahl immer auf den Feststoff beziehen und die Summen der Prozentzahlen für die Komponenten (A) und (B) bzw. (Aa) und (Ab) bzw. (Ba) bis (Bc) jeweils 100 ergeben müssen, mischt, mit der Maßgabe, daß die Mischung eine Säurezahl von mindestens 15 mg KOH/g aufweist, unter Vakuum das Lösemittel entfernt, bis der Feststoffgehalt des Ansatzes mindestens 95 Gew.-% beträgt, den Ansatz mit einem Hilfslösemittel auf einen Feststoffgehalt von 85 bis 93 Gew.-% verdünnt und anschließend die Mischung bei einer Temperatur von 100 bis 150°C so lange hält, bis das Epoxidäquivalent des Ansatzes auf weniger als 0,2 Milliäquivalente/100 g Feststoff gefallen ist.

7.  Wasserverdünnbare Lackbindemittel nach Anspruch 6, <u>dadurch gekennzeichnet,</u> daß die Komponente (Bc) ausgewählt ist aus Glycidyl(meth)acrylat und Glycidylallylether.

## Claims

1.  Process for the preparation of water-dilutable coating binders based on acrylate copolymers, which are obtained by reacting a polycarboxy component with a polyhydroxy component followed by at least partial neutralization of the carboxyl groups, <u>characterized</u> in that

    (A) from 15 to 40% by weight, based on solids content, of an acrylate copolymer as polycarboxy component having an acid number of from 70 to 240 mg of KOH/g, which has been prepared in the form of a solution polymer from

    | (Aa) from 67 to 90 | % by weight of alkyl (meth)acrylates which contain an alkyl radical of 1 to 12 carbon atoms, it being possible for these esters to be replaced in a proportion of up to 50% by weight by aromatic vinyl compounds, and |
    |---|---|
    | (Ab) from 10 to 33 | % by weight of $\alpha,\beta$-ethylenically unsaturated carboxylic acids, |

    is mixed with
    (B) from 60 to 85% by weight, based on solids content, of an acrylate copolymer as polyhydroxy component having a hydroxyl number of from 90 to 250 mg of KOH/g, and an epoxide equivalent of from 0.7 to 26.0 milliequivalents/100 g of solids, which has been prepared in the form of a solution polymer from

    | (Ba) from 40 to 79.9 | % by weight of alkyl (meth)acrylates which contain an alkyl radical of 1 to 12 carbon atoms, it being possible for these esters to be replaced in a proportion of up to 50% by weight of aromatic vinyl compounds, |
    |---|---|
    | (Bb) from 20 to 59.9 | % by weight of monoesters of (meth)acrylic acid with diols, which contain an alkylene radical of 2 to 4 carbon atoms or an oxyalkylene radical of 6 to 12 carbon atoms, and |
    | (Bc) from 0.1 to 3 | % by weight of a monomer which contains epoxide groups, |

    the data for the acid number and hydroxyl number always relating to the solids content and the sums of the percentages for components (A) and (B) and, respectively, (Aa) and (Ab) and (Ba) to (Bc) necessarily giving 100 in each case,

    with the proviso that the mixture has an acid number of at least 15 mg of KOH/g, the solvent is removed in vacuo until the solids content of the batch is at least 95% by weight, the batch is diluted with an auxiliary solvent to a solids content of from 85 to 93% by weight, and then the mixture is maintained at a temperature of from 100 to 150°C until the epoxide equivalent of the batch has fallen to less than 0.2 milliequivalent/100 g of solids.

2.  Process according to Claim 1, <u>characterized</u> in that glycidyl (meth)acrylate and/or glycidyl allyl ether is employed as component (Bc).

3. Use of the binders prepared according to Claims 1 and 2, in combination with crosslinking components and optionally with other coating binders, for the formulation of water-dilutable baking enamels with a low content of organic auxiliary solvents.

4. Use of the coating binders prepared according to Claims 1 and 2, in combination with crosslinking components and further coating raw materials, for the formulation of water-dilutable basecoats.

5. Process for the production of two-coat paint systems, <u>characterized</u> in that after the application of a basecoat to a substrate, a further clearcoat is applied, the basecoat containing the binders prepared according to Claims 1 and 2.

6. Water-dilutable coating binders based on acrylate copolymers, obtainable by reacting a polycarboxy component (A) with a polyhydroxy component (B) followed by at least partial neutralization of the carboxyl groups, <u>characterized</u> in that

(A) from 15 to 40% by weight, based on solids content, of an acrylate copolymer as polycarboxy component having an acid number of from 70 to 240 mg of KOH/g, which has been prepared in the form of a solution polymer from

(Aa) from 67 to 90 % by weight of alkyl (meth)acrylates which contain an alkyl radical of 1 to 12 carbon atoms, it being possible for these esters to be replaced in a proportion of up to 50% by weight by aromatic vinyl compounds, and
(Ab) from 10 to 33 % by weight of $\alpha,\beta$-ethylenically unsaturated carboxylic acids,

is mixed with
(B) from 60 to 85% by weight, based on solids content, of an acrylate copolymer as polyhydroxy component having a hydroxyl number of from 90 to 250 mg of KOH/g, and an epoxide equivalent of from 0.7 to 26.0 milliequivalents/100 g of solids, which has been prepared in the form of a solution polymer from

(Ba) from 40 to 79.9 % by weight of alkyl (meth)acrylates which contain an alkyl radical of 1 to 12 carbon atoms, it being possible for these esters to be replaced in a proportion of up to 50% by weight of aromatic vinyl compounds,
(Bb) from 20 to 59.9 % by weight of monoesters of (meth)acrylic acid with diols, which contain an alkylene radical of 2 to 4 carbon atoms or an oxyalkylene radical of 6 to 12 carbon atoms, and
(Bc) from 0.1 to 3 % by weight of a monomer which contains epoxide groups,

the data for the acid number and hydroxyl number always relating to the solids content and the sums of the percentages for components (A) and (B) and, respectively, (Aa) and (Ab) and (Ba) to (Bc) necessarily giving 100 in each case, with the proviso that the mixture has an acid number of at least 15 mg of KOH/g, the solvent is removed in vacuo until the solids content of the batch is at least 95% by weight, the batch is diluted with an auxiliary solvent to a solids content of from 85 to 93% by weight, and then the mixture is maintained at a temperature of from 100 to 150°C until the epoxide equivalent of the batch has fallen to less than 0.2 milliequivalent/100 g of solids.

7. Water-dilutable coating binders according to Claim 6, <u>characterized</u> in that component (Bc) is selcted from glycidyl (meth)acrylate and glycidyl allyl ether.

**Revendications**

1. Procédé de préparation de liants pour laques diluables à l'eau à base de copolymères d'acrylates, lesquels sont obtenus par la réaction d'un composant polycarboxylé avec un composant polyhydroxylé et une neutralisation subséquente, au moins partielle, des groupes carboxyle, caractérisé en ce que l'on mélange

(A) 15 à 40 % en poids, par rapport à la teneur en matière solide, d'un copolymère d'acrylate en tant que composant polycarboxylé, avec un indice d'acide de 70 à 240 mg de KOH/g,

lequel a été préparé sous forme d'un polymère en solution à partir de

(Aa)   67 à 90 % en poids de (méth)acrylates d'alkyle qui présentent un radical alkyle avec 1 à 12 atomes de C, ces esters pouvant être remplacés en une proportion allant jusqu'à 50 % en poids par des composés vinyliques aromatiques, et

(Ab)   10 à 33 % en poids d'acides carboxyliques α,β-éthyléniquement insaturés,

avec
(B) 60 à 85 % en poids, par rapport à la teneur en matière solide, d'un copolymère d'acrylate en tant que composant polyhydroxylé, ayant un indice d'hydroxyle de 90 à 250 mg de KOH/g, et un équivalent d'époxyde de 0,7 à 26,0 milliéquivalents/100 g de matière solide, lequel a été préparé sous forme d'un polymère en solution, à partir de

(Ba)   40 à 79,9 % en poids de (méth)acrylates d'alkyle qui présentent un radical alkyle avec 1 à 12 atomes de C, ces esters pouvant être remplacés en une proportion allant jusqu'à 50 % en poids par des composés vinyliques aromatiques,

(Bb)   20 à 59,9 % en poids de monoesters de l'acide (méth)acrylique avec des diols qui présentent un radical alkylène avec 2 à 4 atomes de C, ou un radical oxyalkylène avec 6 à 12 atomes de C, ainsi que

(Bc)   0,1 à 3 % en poids d'un monomère présentant des groupes époxyde,

les indications pour l'indice d'acide et l'indice d'hydroxyle se rapportant toujours à la matière solide, et les sommes des pourcentages pour les composants (A) et (B), ou respectivement (Aa) et (Ab), ou respectivement (Ba) à (Bc) devant toujours donner 100,

sous réserve que le mélange présente un indice d'acide d'au moins 15 mg de KOH/g, on élimine le solvant sous vide, jusqu'à ce que la teneur en matière solide du mélange soit d'au moins 95 % en poids, on dilue le mélange avec un solvant auxiliaire, jusqu'à une teneur en matière solide de 85 à 93 % en poids, et ensuite on maintient le mélange à une température de 100 à 150°C, jusqu'à ce que l'équivalent d'époxyde du mélange soit tombé à une valeur inférieure à 0,2 milliéquivalent/ 100 g de matière solide.

2.   Procédé selon la revendication 1, caractérisé en ce que l'on utilise comme composant (Bc) du (méth)acrylate de glycidyle et/ou de l'éther de glycidyle et d'allyle.

3.   Utilisation du liant préparé selon les revendications 1 et 2, en combinaison avec des composants réticulants et éventuellement avec d'autres liants de laques pour la formulation de laques à cuire diluables à l'eau présentant une teneur faible en solvants auxiliaires organiques.

4.   Utilisation des liants pour laques préparés selon les revendications 1 et 2, en combinaison avec des composants réticulants et d'autres matières brutes de laques, pour la formulation de laques de base diluables à l'eau.

5.   Procédé de préparation de laquages à deux couches, caractérisé en ce qu'après le dépôt d'une couche de laque de base sur un substrat, on apporte une autre couche de vernis clair, la couche de laque de base contenant le liant préparé selon les revendications 1 et 2.

6.   Liant pour laque diluable à l'eau à base de copolymères d'acrylates, que l'on peut obtenir par réaction d'un composant polycarboxylé (A) avec un composant polyhydroxylé (B) et une neutralisation au moins partielle subséquente des groupes carboxyle, caractérisé en ce que l'on mélange :

(A) 15 à 40 % en poids, par rapport à la teneur en matière solide, d'un copolymère d'acrylate en tant que composant polycarboxylé, ayant un indice d'acide de 70 à 240 mg de KOH/g, lequel a été préparé sous forme d'un polymère en solution à partir de :

(Aa)   67 à 90 % en poids de (méth)acrylates d'alkyle qui présentent un radical alkyle avec 1 à 12 atomes de C, ces esters pouvant être remplacés en une proportion allant jusqu'à 50 % en poids par des composés vinyliques aromatiques, et

(Ab)   10 à 33 % en poids d'acides carboxyliques éthyléniquement insaturés,

avec

(B) 60 à 85 % en poids, par rapport à la teneur en matière solide, d'un copolymère d'acrylate en tant que composant polyhydroxylé, ayant un indice d'hydroxyle de 90 à 250 mg de KOH/g et un équivalent d'époxyde de 0, 7 à 26,0 milliéquivalents/100 g de matière solide, lequel a été préparé sous forme d'un polymère en solution, à partir de

(Ba)    40 à 79,9 % en poids de (méth)acrylates d'alkyle qui présentent un radical alkyle avec 1 à 12 atomes de C, ces esters pouvant être remplacés en une proportion allant jusqu'à 50 % en poids par des composés vinyliques aromatiques,

(Bb)    20 à 59,9 % en poids de monoesters de l'acide (méth)acrylique avec des diols, qui présentent un radical alkylène avec 2 à 4 atomes de C ou un radical oxyalkylène avec 6 à 12 atomes de C, ainsi que

(Bc)    0,1 à 3 % en poids d'un monomère présentant des groupes époxyde,

les indications pour l'indice d'acide et l'indice d'hydroxyle se rapportant toujours à la matière solide et les sommes des pourcentages pour les composants (A) et (B) ou respectivement (Aa) et (Ab), ou respectivement (Ba) à (Bc) devant toujours donner 100,

sous réserve que le mélange présente un indice d'acide d'au moins 15 mg de KOH/g, on élimine le solvant sous vide jusqu'à ce que la teneur en matière solide du mélange soit d'au moins 95 % en poids, on dilue le mélange avec un solvant auxiliaire jusqu'à une teneur en matière solide de 85 à 93 % en poids et ensuite on maintient le mélange à une température de 100 à 150°C, jusqu'à ce que l'équivalent d'époxyde du mélange soit tombé à une valeur inférieure à 0,2 milliéquivalent/ 100 g de matière solide.

7. Liant pour laque diluable à l'eau selon la revendication 6, caractérisé en ce que le composant (Bc) est choisi parmi le (méth)acrylate de glycidyle et l'éther de glycidyle et d'allyle.